# FASCICULE DE BREVET EUROPEEN

(11) **EP 0 493 216 B1**
(45) Date de publication et mention de la délivrance du brevet: **19.05.1993**
(21) Numéro de dépôt: 91403469.9
(22) Date de dépôt: 19.12.1991
(51) Int. Cl.: G05B 19/04

(54) **Procédé de contrôle d'une machine à plasma réactif**
Überwachungsverfahren für eine reaktive Plasmamaschine
Monitoring process for a reactive plasma machine

(30) Priorité: 21.12.1990 FR 9016079
(43) Date de publication de la demande: 01.07.1992
(73) Titulaire: SGS-THOMSON MICROELECTRONICS S.A., 94250 Gentilly (FR)
(72) Inventeur: de Villeneuve, Thierry, Cabinet Ballot-Schmit, F-75116 Paris (FR); Domergue, Bernard, Cabinet Ballot-Schmit, F-75116 Paris (FR)
(74) Mandataire: Schmit, Christian Norbert Marie

(56) Documents cités:
- EP-A- 0 276 937
- US-A- 4 736 304

## Description

L'invention a pour objet la modification d'une machine à plasma réactif autonome, pour permettre le contrôle de la validité de la sélection d'un programme sur cette machine, par un calculateur central. Par exemple, l'invention s'applique à une machine de gravure par plasma réactif, dans une chaîne de fabrication de semi-conducteurs.

En matière de fabrication industrielle de semi-conducteurs, on assiste en effet à une limitation des performances des postes de travail des machines à plasma réactif autonomes. Une cause de ces limitations provient de la nécessité d'un opérateur humain pour faire la sélection et le lancement d'un programme sur une machine ou même le chargement dans la machine d'un lot de plaquettes ou tranches de silicium. Une erreur de l'opérateur et le lot est perdu : on dit qu'il est "scrapé" (scrapped en littérature anglo-saxonne). De plus l'erreur peut ne pas être tout de suite identifiée, et ce lot continue alors inutilement à être travaillé.

Dans l'invention, on veut pouvoir contrôler que l'opérateur ne s'est pas trompé pour, le cas échéant, mettre la machine en erreur avant que le plasma ne soit déclenché et sauver le lot à traiter ou bien identifier de suite le lot à mettre au rebut.

Or, dans un aspect de l'automatisation des chaînes de fabrication, on cherche à gérer l'ensemble des machines d'une chaîne de fabrication par un calculateur central CAM (Computer Aided Manufacturing). Ce calculateur suit chaque lot à traiter. Il doit non seulement assurer la synchronisation des diverses manipulations sur les lots de plaquettes, mais aussi contrôler l'ensemble des paramètres de fabrication des machines.

Cette démarche étant nouvelle, seules les nouvelles machines de fabrication s'intègrent dans un tel environnement automatisé. En particulier, elles ont à cet effet les interfaces nécessaires pour communiquer avec le calculateur central selon un protocole déterminé, voire normalisé de communication. Dans ces conditions, le calculateur central peut contrôler les entrées et les sorties et vérifier que ces informations sont cohérentes (EP-A- 0 276 937).

Les anciennes machines, conçues dans un esprit d'autonomie, ne peuvent être intégrées par l'utilisateur dans un tel environnement : elles n'ont pas le logiciel de base ni les interfaces nécessaires, elles ne peuvent s'adapter au protocole de communication. Seul le fabricant d'une telle machine pourrait réaliser une telle transformation importante et très coûteuse. Le fabricant préfère développer entièrement des nouvelles machines.

Comme il faut cependant que le calculateur central de gestion d'une chaîne de fabrication suive le lot à chaque étape de traitement, on procède comme-suit :
- une fiche de suivi est associée à chaque lot,
- à une étape donnée, pour un traitement du lot par une telle machine autonome, l'opérateur va renseigner le calculateur central avec le numéro d'identification du lot,
- en retour, le calculateur indique quelle recette doit être sélectionnée sur la machine autonome,
- l'opérateur sélectionne la recette et charge le lot dans la machine.

Si l'opérateur se trompe, le calculateur ne peut pas le contrôler et encore moins intervenir et le lot sera perdu.

Or l'opérateur peut en effet :
- se tromper de numéro de lot,
- se tromper de fiche de suivi,
- se tromper de sélection sur la machine,
- quand un lot est divisé par exemple en 2 paniers, se tromper de panier à charger (par exemple un même panier subira 2 fois le même traitement, et l'autre ne le subira pas).

Dans tous les cas, le lot est perdu pour la fabrication. Si l'erreur n'est pas remarquée tout de suite, il faudra attendre les contrôles des lots en fin de fabrication, qui permettront d'identifier ce lot à mettre au rebut. En pratique, ces erreurs humaines diminuent de façon significative le rendement de la chaîne de fabrication.

Un premier but de l'invention est de contrôler la sélection de la recette sur une telle machine à plasma réactif autonome, par exemple une machine de gravure par plasma de plaquettes de silicium et plus généralement sur une machine autonome utilisant des fluides dont les flux sont contrôlés. On entend par fluide un gaz ou un liquide ou même des particules solides transportées par un flux liquide ou gazeux.

Dans un exemple de machine de gravure par plasma, une recette consiste à déterminer les différents paramètres qui conditionnent les cycles de gravure.

Ces principaux paramètres sont :
- les gaz réactifs, qui vont former le plasma réactif dans la chambre de gravure,
- leur débit respectif,
- leur pression,
- la puissance de la radio fréquence pour déclencher l'attaque par le plasma réactif,
- les paramètres de temps ou durée,
- les paramètres déterminant la fin du cycle de gravure (intensité lumineuse dans les raies spectrales choisies).

Un cycle de gravure comporte en général les phases suivantes :
1. - chargement d'une plaquette dans la chambre de gravure
2. - pompage des gaz
3. - stabilisation des débits et pressions des gaz réactifs
4. - gravure par plasma
5. - pompage des gaz résiduels
6. - déchargement de la plaquette
7. - en fin de traitement du lot : nettoyage de la chambre à vide ( reprise des phases 2 à 6) et/ou purge des lignes de gaz avec un gaz neutre (N2)

Chaque réservoir de gaz est commandé par un contrôleur de débit (Mass Flow Controler) qui ouvre plus ou moins le robinet du réservoir de gaz, en fonction de la commande qu'il reçoit de la machine :
- commande de pleine ouverture ou de pleine fermeture, en phase de purge
- commande d'ouverture à x%

A la fin de la phase de stabilisation, d'une durée de 60 à 90 secondes par exemple, la machine contrôle en particulier le débit des gaz. En principe, ce contrôle est terminé avant le début de l'attaque du plasma.

Chaque contrôleur de débit reçoit de la machine une commande de débit, et fournit à la machine le débit réel. Un contrôleur de débit a donc une entrée de commande et une sortie de lecture, reliées à la machine.

En pratique, ce sont par exemple des entrée/sortie analogiques. Ainsi une commande de débit de x, correspondra à une tension analogique d'une amplitude de x% de la tension d'alimentation Vcc du contrôleur reçue sur l'entrée de commande du contrôleur.

Dans la phase de contrôle du débit des gaz, chaque contrôleur de débit reçoit donc une commande de débit, en pratique une tension analogique de x% de Vcc. Et chaque contrôleur de débit envoie sur sa sortie analogique, la valeur correspondant à l'ouverture du robinet, c'est à dire la valeur de débit réel qui est lue par la machine. La machine peut ainsi contrôler que le gaz circule bien entre le réservoir et la chambre de gravure.

En effet, si la réponse (débit réel) est différente du paramètre de débit dans la recette sélectionnée par l'opérateur, c'est que le gaz circule mal. La machine, qui doit faire concorder la réponse du contrôleur avec le paramètre de la recette sélectionnée avant de déclencher l'attaque du plasma, se met alors en erreur, décharge la plaquette de la chambre, et l'opérateur décharge le lot ou panier de plaquettes de la machine.

Il faut cependant dans un certain nombre de machines, que cette différence soit vraiment significative : pour de telles machines très tolérantes, une erreur de 10 ou 20% de Vcc peut par exemple être tolérée.

Dans l'invention, on modifie une partie paramètrée du logiciel d'application de la machine que sont les recettes mémorisées, sans toucher au logiciel de base du fabricant de la machine.

Dans l'invention, on modifie chaque recette de la machine pour introduire un faux paramètre de débit dont la valeur identifie de façon bi-univoque la recette, et on utilise un moyen pour simuler un contrôleur, qui connaît la valeur du faux paramètre de la recette que l'opérateur devrait avoir sélectionnée. Si l'opérateur s'est trompé, il n'y aura pas égalité entre les deux faux paramètres et la machine se mettra en erreur. Le lot sera sauvé. On détourne donc une fonction de contrôle de la machine dédiée au contrôle de la bonne circulation des gaz en une fonction de contrôle de sélection de recette.

Le moyen pour simuler est de préférence relié au calculateur central qui lui indique cette valeur du faux paramètre de la recette que l'opérateur aurait dû sélectionner. Dans l'invention, le faux contrôleur crée donc un lien indirect entre la machine et le calculateur.

Dans l'invention, le faux contrôleur est intelligent, pour pouvoir interpréter les commandes de la machine et dialoguer avec le calculateur central.

Dans l'invention, le faux contrôleur analyse les commandes qu'il reçoit de la machine, pour déterminer chacune des étapes de gravure et déterminer le nombre de plaquettes traitées. Il transmet cette information au calculateur.

Dans un premier procédé de contrôle selon l'invention, on introduit dans la recette une ligne de gaz supplémentaire, le gaz associé étant fictif (pas de réservoir correspondant). Et à cette ligne de gaz correspond dans la recette un paramètre de débit, le faux paramètre, dont la valeur déterminera de façon bi-univoque la recette sélectionnée. Ce premier procédé de contrôle n'est cependant applicable que dans une machine dont au moins une ligne de gaz n'est pas utilisée en opérationnel.

Un perfectionnement de la machine consiste à faire faire la comparaison entre la commande de débit de la machine et le faux paramètre transmis par le calculateur par le moyen pour simuler. A l'erreur de conversion analogique près, qui dépend des caractéristiques du convertisseur choisi (résolution, précision), on effectue une comparaison absolue, sans intervalle de tolérance.

Si le moyen pour simuler trouve une différence, une première solution consiste à lui faire renvoyer en lecture (sur lec4) à la machine, une valeur qui s'écarte résolument de la commande reçue sur com4, par exemple avec une différence de 50 ou 80% de Vcc en plus ou en moins. Ainsi on est sûr, quelle que soit la tolérance de la machine, de la faire partir en erreur et donc d'arrêter le traitement du lot de plaquettes de silicium.

Une autre solution consiste à utiliser une sortie du moyen pour simuler pour déclencher dans la machine une erreur prioritaire qui la fasse s'arrêter instantanément. Par exemple, une sortie qui couperait le retour d'un capteur de contrôle prioritaire, comme celui des circuits de refroidissement de telles machines.

Dans ces deux cas, on est sûr que même une machine très tolérante sur le contrôle des débits parte immédiatement en erreur sur la détection d'erreur de sélection de la recette par le moyen pour simuler, avant le déclenchement du plasma réactif.

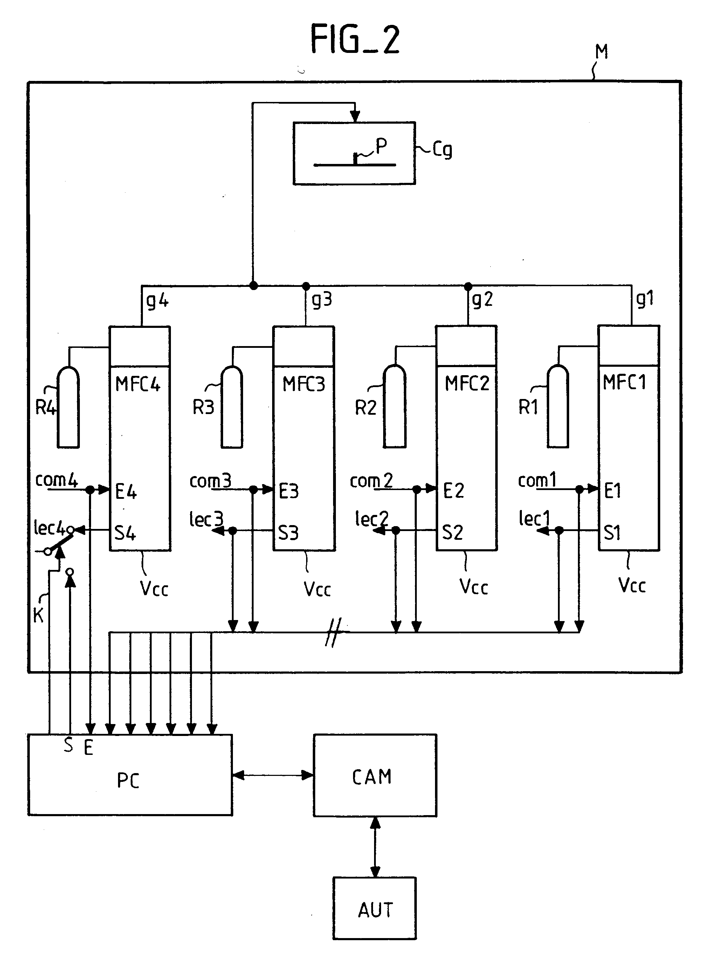

Dans un second procédé de contrôle selon l'invention, on ajoute un cycle de gravure supplémentaire dans toutes les recettes, sans puissance de radio-fréquence commandée, pour ne pas déclencher le plasma. Pour la phase de stabilisation de ce cycle supplémentaire, les paramètres de débit de tous les gaz excepté celui d'un gaz déterminé, ont la même valeur dans chaque recette, la combinaison qu'ils forment n'étant utilisée dans aucune des recettes pour réaliser un vrai plasma d'attaque. Le paramètre de débit du gaz déterminé (g4 dans la figure 2) prend lui une valeur différente dans chaque recette : c'est le faux paramètre. Le moyen pour simuler détecte la phase de stabilisation supplémentaire dans une recette, en reconnaissant la combinaison des paramètres de débit des autres gaz, et se substitue alors au contrôleur de débit du gaz déterminé pour répondre comme débit réel, la valeur du faux paramètre de la recette que l'opérateur devrait avoir sélectionnée.

L'invention a donc pour objet un procédé de contrôle d'une machine qui utilise des fluides, chaque fluide ayant son flux contrôlé par un contrôleur de flux associé, un contrôleur de flux ayant une entrée pour recevoir une commande de flux sur une ligne de commande de la machine et une sortie pour délivrer le flux réel sur une ligne de lecture de la machine, machine dans laquelle des recettes sont mémorisées et sur laquelle un opérateur sélectionne une recette parmi les recettes mémorisées, recette qui indique pour une étape de fabrication les fluides utilisés et leurs flux de commande, machine qui, pour chaque fluide utilisé, vient commander dans une phase de stabilisation le flux de commande associé sur l'entrée du contrôleur de flux associé, et vient lire à la fin de cette phase de stabilisation le flux réel associé sur la sortie du contrôleur de flux associé, machine qui part en erreur si pour un fluide utilisé, le flux de commande et le flux réel sont différents,
procédé de contrôle caractérisé en ce qu'un faux paramètre de flux est ajouté dans chacune des recettes mémorisées avec une valeur différente pour chacune, et qu'un moyen pour simuler un contrôleur de flux reçoit dans la phase de stabilisation ce faux paramètre de flux comme flux de commande sur une ligne de commande de la machine et délivre en sortie à la machine un flux réel correspondant au faux paramètre de flux associé à une recette que l'opérateur devrait avoir sélectionnée.

D'autres caractéristiques de l'invention sont décrites dans la description qui suit faite, à titre indicatif et non limitatif de l'invention et en référence aux dessins annexés dans lesquels :
- la figure 1 représente un premier système de contrôle selon l'invention,
- la figure 2 représente un second système de contrôle selon l'invention.

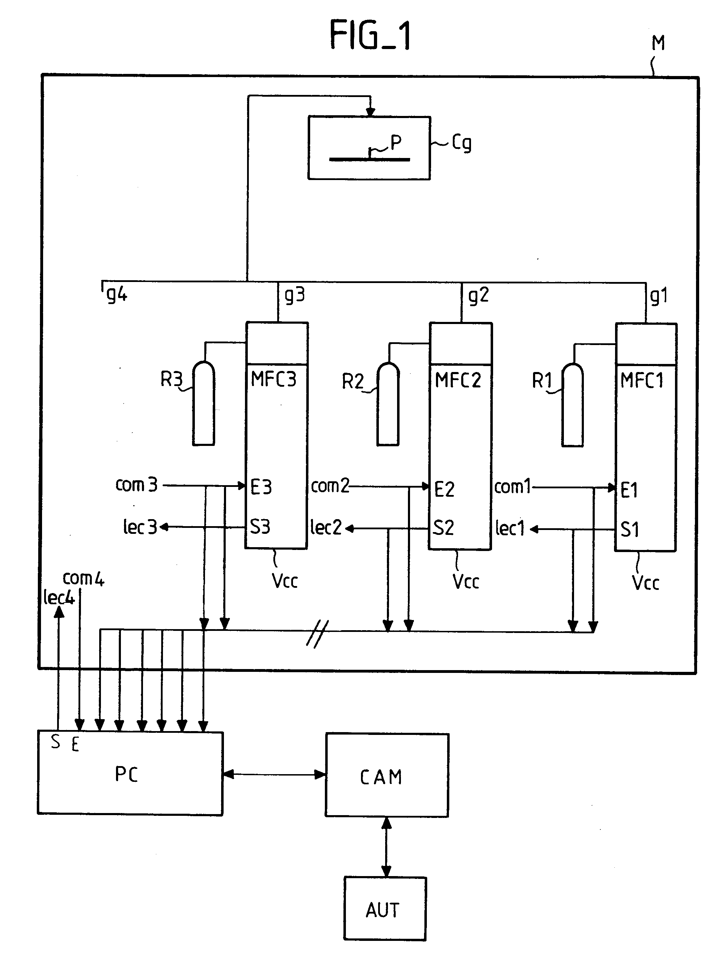

Un premier procédé de contrôle est représenté en figure 1. Il s'applique aux machines qui n'utilisent pas en opérationnel toutes les lignes de fluide qu'elles sont capables de gérer. Dans l'exemple, la machine M est une machine de gravure par plasma capable de gérer quatre lignes de gaz g1 à g4, mais n'en utilise que 3 en opérationnel : g1 à g3. Les lignes de gaz entrent dans la chambre de gravure Cg, dans laquelle une plaquette p à traiter est posée sur un plateau ou support. Chaque ligne de gaz gi utilisée est contrôlée par un contrôleur de débit MFCi (iε [1,3]).

Chaque MFCi utilisé en opérationnel est connecté à un réservoir de gaz Ri et contrôle l'ouverture du robinet du réservoir. Schématiquement sur la figure 1, on a représenté les réservoirs de gaz R1, R2 et R3 associés aux contrôleurs MFC1, MFC2 et MFC3.

Chaque MFCi (Mass Flow Controler) pour i = 1 à 3 est commandé sur une entrée de commande Ei par une ligne de commande comi de la machine et contrôlé sur une sortie de lecture Si par une ligne de lecture leci de la machine.

Un MFCi peut ainsi recevoir de la machine sur son entrée Ei une commande de débit x et répondre sur sa sortie avec le débit réel.

Par exemple, ces informations sont des tensions analogiques. Dans cet exemple, une commande de débit x peut s'exprimer sous forme d'un pourcentage par rapport à la tension d'alimentation Vcc du MFCi (x% de Vcc).

Dans l'invention, les lignes de commande com4 et de contrôle lec4 de la machine pour la ligne de gaz g4 non utilisée en opérationnel sont connectées respectivement sur une entrée E et une sortie S d'un moyen pour simuler un contrôleur (PC). Ce moyen est intelligent, il comporte un microprocesseur, de la mémoire et des interfaces entrées/sorties.

En particulier, il comprend des convertisseurs numérique/analogique et analogique/numérique non représentés pour aller lire et écrire sur l'entrée E et la sortie S.

Ce moyen pour simuler un contrôleur de débit, comporte en outre une interface de communication avec un calculateur CAM ; cette interface est par exemple une liaison série.

Le calculateur CAM est, dans l'esprit de l'invention, celui qui contrôle la chaîne de fabrication : il commande les machines conçues comme des automates et suit les différentes étapes de fabrication des différents lots de plaquettes de semi-conducteur. Un tel automate qu'il contrôle (AUT) est représenté sur la figure 1. Pour les machines autonomes, le calculateur est renseigné par l'opérateur sur le numéro du lot à traiter. Et le calculateur détermine la recette à sélectionner sur la machine. L'opérateur va ensuite sélectionner la recette sur la machine, par exemple sur un écran à touches sensitives de la machine (non représenté).

Dans l'invention, les recettes des machines autonomes qui n'utilisent pas toutes leurs lignes de gaz, sont transformées : on ajoute en effet dans ces recettes une ligne de gaz supplémentaire à gérer, bien que cette ligne de gaz (g4 dans la figure 1) ne soit pas en réalité raccordée à un réservoir de gaz. A ce gaz fictif, on associe donc en particulier un paramètre de débit : c'est le faux paramètre de l'invention.

Dans l'exemple de la figure 1, c'est le gaz g4 qui est fictif.

Comme cette ligne de gaz fictif est déclarée utilisée dans la recette modifiée, la machine M va commander sur com4 le débit lu dans la recette et lire sur lec4 le débit réel.

Dans l'invention, c'est alors le moyen pour simuler qui lit la ligne de commande com4 de la machine et qui lui répond sur la ligne de lecture lec4.

Dans l'invention, quand une commande de débit du gaz fictif est envoyée par la machine M, autre qu'une commande de pleine ouverture ou fermeture, le moyen pour simuler, donne en réponse à la machine comme valeur du débit réel du gaz g4, la valeur du faux paramètre de la recette que l'opérateur devrait avoir sélectionnée. De préférence, cette valeur lui aura préalablement été envoyée par le calculateur avant le début du traitement du lot.

Si cette réponse du moyen pour simuler diffère du débit commandé par la machine, c'est à dire le débit indiqué dans la recette sélectionnée par l'opérateur, cela voudra alors dire que l'opérateur s'est trompé. Ce contrôle se fait normalement en fin de phase de stabilisation des gaz, avant l'envoi de la radio-fréquence de déclenchement du plasma.

Si la machine détecte une erreur en fin de phase de stabilisation, elle se met en erreur et décharge la plaquette de la chambre de gravure et l'opérateur décharge le panier de la machine : toutes les plaquettes sont sauvées, y compris celle dans la machine, le plasma n'ayant pas été déclenché.

Si on avait pris l'exemple d'une machine à gaz réactifs qui traite plusieurs plaquettes à la fois, toutes ces plaquettes auraient de même été déchargées et sauvées.

Quand une commande de pleine ouverture ou de pleine fermeture est envoyée, le moyen pour simuler répond comme débit réel, pleine ouverture ou pleine fermeture. En effet, ces commandes correspondent à la phase de purge de la chambre, entre chaque lot à traiter. Cette phase qui est indépendante de la recette utilisée est nécessaire pour passer au traitement du lot suivant.

Le moyen pour simuler est de préférence un PC (personal computer) ou une station de travail informatique. En effet, avec un tel matériel courant, il est aisé d'assurer les différentes interfaces : celles avec la machine, celle avec le calculateur.
Les cartes d'interfaces entrées/sorties pour PC (ou station de travail) sont en effet nombreuses dans le commerce pour répondre à tout besoin de l'utilisateur. Il est ainsi facile de s'adapter à tout type d'interface possible de la machine.
Le PC est un matériel d'utilisation souple et courant.

Dans l'invention, seuls sont alors à développer spécifiquement le gestionnaire de protocole de dialogue entre le moyen pour simuler et le calculateur, le logiciel de simulation : lecture/écriture sur les interfaces avec la machine, analyse des commandes, et à modifier les recettes mémorisées dans la machine pour déclarer une ligne supplémentaire de gaz et les paramètres de débit associés. Toutes ces considérations montrent le moindre coût d'une telle transformation comparé à l'achat d'une nouvelle machine, même si elle ne permet que le contrôle à posteriori des choix d'un opérateur, avec récupération du lot, et non un contrôle total de la machine par le calculateur central.

Dans l'invention, l'analyse des commandes de la machine par le moyen pour simuler permet aussi de compter les cycles de gravure opérés : il y a autant de cycles de gravure que par exemple de commande de débit autres que pleine ouverture ou fermeture (1 seule phase de purge par lot). Ainsi on peut en déduire le nombre de plaquettes traitées. Comme le calculateur, qui suit le lot, connaît exactement le nombre de plaquettes du lot traité, par comparaison avec le nombre calculé que lui a transmis le moyen pour simuler, il peut déclencher une alarme si il n'y a pas égalité : l'erreur est tout de suite détectée. Le lot est perdu, puisque cette erreur n'est détectée qu'à la fin du traitement du lot, mais cela évite de continuer à le travailler dans la chaîne de fabrication ; on économise donc de l'argent. De plus, dans certain cas le lot sera malgré tout récupérable.

De manière avantageuse, toutes les entrée/sortie de tous les contrôleurs sont dérivées sur des entrées du moyen pour simuler. Celle-ci agit alors comme un espion et peut analyser l'ensemble des commandes et réponses des contrôleurs. Il peut ainsi détecter toute anomalie. On peut aussi espionner des lignes de status de la machine en dérivant ces lignes sur des entrées du PC (et en incorporant dans le PC, la carte d'interface qui va bien).

Mais on a vu par ailleurs que certaines machines pouvaient être très tolérantes sur le contrôle des débits. Or dans l'invention, le débit du gaz g4 prend une valeur différente pour chaque recette, cette valeur étant un pourcentage de Vcc autre que 0 (pleine fermeture) et 100% de Vcc (pleine ouverture). Pour une machine qui aurait beaucoup de recettes, l'écart entre deux valeurs de débit de g4 pourrait être alors petit, par exemple inférieure à 10% de Vcc. Si la machine a pour ce contrôle des débits une tolérance supérieure à 10% de Vcc, elle ne verra pas d'erreur de comparaison.

Un perfectionnement de la machine consiste alors à faire faire la comparaison entre la commande de débit de la machine et le faux paramètre transmis par le calculateur par le moyen pour simuler. A l'erreur de conversion analogique près, qui dépend des caractéristiques du convertisseur choisi (résolution, précision), on effectue une comparaison absolue, sans intervalle de tolérance.

Si le moyen pour simuler trouve une différence, une première solution consiste à lui faire renvoyer en lecture sur lec4 à la machine une valeur qui s'écarte résolument de la commande reçue sur com4, par exemple avec une différence de 50 ou 80% de Vcc en plus ou en moins, de manière à sortir de la tolérance de la machine. Ainsi on est sûr, quelle que soit la tolérance (par exemple 10 ou 20% de Vcc) de la machine, de la faire partir en erreur et donc d'arrêter le traitement du lot de plaquettes de silicium.

Une autre solution consiste à utiliser une sortie du moyen pour simuler pour déclencher dans la machine une erreur prioritaire qui la fasse s'arrêter instantanément. Par exemple, une sortie qui couperait le retour d'un capteur de contrôle prioritaire, comme celui des circuits de refroidissement de telles machines.

Dans ces deux cas, on est sûr que même une machine très tolérante sur le contrôle des débits parte immédiatement en erreur sur la détection d'erreur de sélection de la recette par le moyen pour simuler, avant le déclenchement du plasma réactif.

Un deuxième procédé de contrôle selon l'invention est représenté en figure 2 (on utilise les références de la figure 1 pour désigner les mêmes éléments). Il permet en particulier de résoudre le cas où, en opérationnel, la machine utilise toutes les lignes de gaz disponibles. Dans cette réalisation, toutes les entrées Ei des contrôleurs sont dérivées sur des entrées du PC. Et la ligne de lecture de la machine vers l'un des contrôleurs, lec4, vers le contrôleur MFC4 dans la figure 2, peut être commutée soit sur la sortie S4 du contrôleur MFC4, soit sur une sortie S du PC. La commande de commutation K est assurée par le PC.

Dans l'invention, on modifie les recettes de la machine en ajoutant un cycle de gravure supplémentaire, sans puissance commandée pour le plasma, pour ne pas déclencher l'attaque du plasma dans ce cycle. Pour la phase de stabilisation de ce cycle supplémentaire, les paramètres de débit de tous les gaz excepté celui d'un gaz déterminé, ont la même valeur dans chaque recette, la combinaison qu'ils forment n'étant utilisée dans aucune pour réaliser un vrai plasma d'attaque. Le paramètre de débit du gaz déterminé (g4 dans la figure 2) prend lui une valeur différente dans chaque recette : c'est le faux paramètre.

En effet, dans ce deuxième mode de contrôle, le PC reconnaît la phase de stabilisation du cycle supplémentaire par l'analyse des entrées de commande des autres MFCi : E1 à E3 dans l'exemple. La phase supplémentaire correspond par exemple dans toute les recettes à la combinaison des commandes de débits suivante :
E1 = 20 et E2 = 20 et E3 = 20
Cette combinaison est la même pour toutes les recettes et ne correspond à aucun plasma réactif utilisé en opérationnel. Cette combinaison lue par le PC lui permet de reconnaître la phase de stabilisation du cycle supplémentaire dans n'importe quelle recette. Il commute alors la ligne de lecture de la machine, lec4, sur sa sortie S. Et c'est lui qui répond comme débit réel du gaz g4, par la valeur du faux paramètre de la recette que l'opérateur devrait avoir sélectionnée.
S'il n'y a pas correspondance avec le faux paramètre de la recette sélectionnée dans la machine, c'est que l'opérateur s'est trompé.

Là encore, il y a bijection entre la recette et la valeur de ce faux paramètre.

Comme dans le 1er mode de réalisation, on peut compter les plaquettes, analyser l'ensemble du déroulement de la recette en espionnant la sortie des contrôleurs... nous ne reviendrons donc pas sur ces avantages.

Le perfectionnement vu pour le 1er mode de réalisation s'applique aussi dans le second mode.

On comprendra aisément que l'invention s'applique plus généralement aux machines utilisant des fluides dont le débit ou la pression est contrôlé et plus généralement, dont le flux est contrôlé par un contrôleur de flux. On entend par fluide, un gaz, ou un liquide ou même des particules solides transportées par un flux liquide ou gazeux.

## Revendications

1. Procédé de contrôle d'une machine (M) qui utilise des fluides, chaque fluide ayant son flux contrôlé par un contrôleur de flux associé (MFCi), un contrôleur de flux ayant une entrée (Ei) pour recevoir une commande de flux sur une ligne de commande (comi) de la machine et une sortie (Si) pour délivrer le flux réel sur une ligne de lecture (leci) de la machine, machine dans laquelle des recettes sont mémorisées et sur laquelle un opérateur sélectionne une recette parmi les recettes mémorisées, recette qui indique pour une étape de fabrication les fluides utilisés et leurs flux de commande, machine qui, pour chaque fluide utilisé, vient commander dans une phase de stabilisation le flux de commande associé sur l'entrée du contrôleur de flux associé, et vient lire à la fin de cette phase de stabilisation le flux réel associé sur la sortie du contrôleur de flux associé, machine qui part en erreur si pour un fluide utilisé, le flux de commande et le flux réel sont différents,
procédé de contrôle caractérisé en ce qu'un faux paramètre de flux est ajouté dans chacune des recettes mémorisées avec une valeur différente pour chacune, et qu'un moyen pour simuler (PC) un contrôleur de flux reçoit dans la phase de stabilisation ce faux paramètre de flux comme flux de commande sur une ligne de commande (com4) de la machine et délivre en sortie (lec4) à la machine un flux réel correspondant au faux paramètre de flux associé à une recette que l'opérateur devrait avoir sélectionnée.

2. Procédé de contrôle selon la revendication 1, caractérisé en ce que pour toutes les recettes mémorisées le faux paramètre de flux est associé à un fluide non utilisé dans l'étape de fabrication, et en ce que l'on modifie chaque recette mémorisée pour que ce fluide soit déclaré utilisé, avec comme flux, une valeur différente dans chaque recette.

3. Procédé de contrôle selon la revendication 2, caractérisé en ce que sur réception d'une commande de flux de pleine ouverture, respectivement de pleine fermeture correspondant au fluide non utilisé dans l'étape de fabrication, le moyen pour simuler renvoie comme flux réel de ce fluide une information pleine ouverture, respectivement pleine fermeture.

4. Procédé de contrôle selon les revendications précédentes pour une machine pour gravure par plasma de plaquettes de silicium utilisant des gaz réactifs comme fluides.

5. Procédé de contrôle selon la revendication 1 caractérisé en ce qu'un cycle de gravure dans lequel l'attaque du plasma n'est pas déclenché est ajouté dans l'étape de fabrication, les flux de commande des gaz réactifs étant ajoutés dans chacune des recettes mémorisées, le faux paramètre de flux étant le flux de commande dans ce cycle de gravure d'un premier gaz réactif, la combinaison formée par les flux de commande des autres gaz réactifs étant la même dans toutes les recettes mémorisées pour ce cycle de gravure, le moyen pour simuler recevant tous les flux de commande de chacun des contrôleurs de flux de manière à reconnaître la phase de stabilisation de ce cycle de gravure par la combinaison des flux des autres gaz réactifs et prendre alors la place du contrôleur de flux associé au premier gaz réactif pendant cette phase de stabilisation supplémentaire.

6. Procédé de contrôle selon l'une quelconque des revendications précédentes, caractérisé en ce que le moyen pour simuler commande un microprocesseur.

7. Procédé de contrôle selon la revendication 1, caractérisé en ce que le moyen pour simuler communique avec un calculateur central qui sait quelle recette l'opérateur devrait avoir sélectionné et qui transmet au moyen pour simuler le faux paramètre correspondant à cette recette que l'opérateur devrait avoir sélectionnée.

8. Procédé de contrôle selon la revendication 1, caractérisé en ce qu'il est utilisé pour une machine de gravure par plasma pour traiter des lots de plaquettes de poly-silicium.

9. Procédé de contrôle selon la revendication 8, caractérisé en ce que le moyen pour simuler transmet à un calculateur le nombre de plaquettes de silicium gravées d'un lot traité par la machine.

10. Procédé de contrôle selon la revendication 7, caractérisé en ce que le moyen pour simuler transmet à un calculateur des informations sur l'état de la machine.

11. Procédé de contrôle selon les revendications précédentes, caractérisé en ce que le moyen pour simuler fait la comparaison entre le flux de commande qu'il reçoit en entrée et la valeur du faux paramètre de flux de la recette que l'opérateur devrait avoir sélectionnée, et en ce que le flux réel qu'il délivre en sortie à la machine en cas de différence, a une une valeur très différente du flux commandé par la machine.

12. Procédé de contrôle selon les revendications précédentes, caractérisé en ce que le moyen pour simuler fait la comparaison entre le flux de commande et le faux paramètre de la recette que l'opérateur devrait avoir sélectionnée, et en cas de différence, provoque une erreur prioritaire dans la machine pour alerter un organe de sécurité de la machine.

## Patentansprüche

1. Verfahren zum Steuern einer Maschine (M), die von Fluiden Gebrauch macht, wobei der Fluß jedes Fluids von einer zugehörigen Flußsteuereinheit (MFCi) gesteuert wird, wobei eine Flußsteuereinheit einen Eingang (Ei) für den Empfang eines Flußsteuerbefehls an einer Steuerleitung (COMi) der Maschine und einen Ausgang (Si) zur Abgabe des tatsächlichen Flusses an eine Leseleitung (leci) der Maschine aufweist, wobei in der Maschine Rezepturen gespeichert sind, und in der eine Bedienungsperson unter diesen gespeicherten Rezepturen eine Rezeptur auswählt, die für eine Fabrikationsstufe die verwendeten Fluide und ihren Steuerfluß angibt, wobei die Maschine für jedes ausgewählte Fluid in einer Stabilisationsphase den zugehörigen Steuerfluß am Eingang der zugehörigen Flußsteuereinheit steuert und am Ende dieser Stabilisierungsphase den tatsächlichen Fluß am Ausgang der zugehörigen Flußsteuereinheit liest, wobei die Maschine in einen Fehlerzustand geht, wenn für ein verwendetes Fluid der Steuerfluß und der tatsächliche Fluß verschieden sind, dadurch gekennzeichnet, daß in jeder der gespeicherten Rezepturen ein falscher Flußparameter mit einem für jede verschiedenen Wert hinzugefügt wird und daß ein Mittel zum Simulieren (PC) einer Flußsteuereinheit in der Stabilisierungsphase diesen falschen Flußparameter als Steuerfluß an einer Steuerleitung (com4) der Maschine empfängt und am Ausgang (lec4) der Maschine einen tatsächlichen Fluß liefert, der dem falschen Flußparameter entspricht, der einer Rezeptur entspricht, die die Bedienungsperson ausgewählt hätte.

2. Verfahren zum Steuern nach Anspruch 1, dadurch gekennzeichnet, daß für alle gespeicherten Rezepturen der falsche Flußparameter einem in dieser Fabrikationsphase nicht benutzen Fluid zugeordnet ist und daß jede gespeicherte Rezeptur so modifiziert wird, daß dieses Fluid als benutzt deklariert wird, wobei als Fluß ein Wert verwendet wird, der in jeder Rezeptur anders ist.

3. Steuerverfahren nach Anspruch 2, dadurch gekennzeichnet, daß für den Empfang eines Flußsteuerbefehls zum vollen Öffnen bzw. zum vollen Schließen entsprechend dem nicht benutzten Fluß in dieser Fabrikationsphase das Mittel zum Simulieren als tatsächlichen Fluß diese Fluids eine Information zum vollen Öffnen bzw. zum vollen Schließen überträgt.

4. Verfahren zum Steuern nach den vorhergehenden Ansprüchen für eine Maschine zum Plasmaätzen von Siliziumscheiben unter Verwendung reaktiver Gase als Fluide.

5. Steuerverfahren nach Anspruch 1, dadurch gekennzeichnet, daß ein Ätzzyklus, in welchem der Plasmaangriff nicht ausgelöst wird, zur Fabrikationsphase hinzugefügt wird, daß die Steuerflüsse der reaktiven Gase zu jeder der gespeicherten Rezepturen hinzugefügt werden, wobei der falsche Flußparameter in dem Ätzzyklus eines ersten reaktiven Gases der Steuerfluß ist, wobei die Kombination aus den Steuerflüssen der anderen reaktiven Gase in allen gespeicherten Rezepturen für den Ätzzyklus die gleiche ist, wobei das Mittel zum Simulieren alle Steuerflüsse jeder der Flußsteuereinheiten so empfängt, daß die Stabilisierungsphase dieses Ätzzyklus durch die Kombination der Flüsse der anderen reaktiven Gase wiedererkannt wird und den Platz der dem ersten reaktiven Gas während dieser zusätzlichen Stabilisierungsphase zugeordneten Flußsteuereinheit einnimmt.

6. Steuerverfahren nach einem der vorhergehenden Ansprüche, dadurch gekennzeichnet, daß das Mittel zum Simulieren der Steuerung ein Mikroprozessor ist.

7. Verfahren zum Steuern nach Anpruch 1, dadurch gekennzeichnet, daß das Mittel zum Simulieren mit einem zentralen Rechner in Verbindung steht, der weiß, welche Rezeptur die Bedienungsperson ausgewählt hätte und der zu den Mitteln zum Simulieren den falschen Parameter entsprechend dieser Rezeptur, die die Bedienungsperson ausgewählt hätte, überträgt.

8. Verfahren zum Steuern nach Anspruch 1, dadurch gekennzeichnet, daß es für eine Plasmaätzmaschine zum Verarbeiten von Gruppen von Plättchen aus polykristallinem Silizium benutzt wird.

9. Verfahren zum Steuern nach Anspruch 8, dadurch gekennzeichnet, daß das Mittel zum Simulieren zu einem Rechner eine Anzahl geätzter Siliziumscheiben einer durch die Maschine verarbeiteten Gruppe überträgt.

10. Verfahren zum Steuern nach Anspruch 7, dadurch gekennzeichnet, daß das Mittel zum Simulieren zu einem Rechner Informationen über den Zustand der Maschine überträgt.

11. Verfahren zum Steuern nach den vorhergehenden Ansprüchen, dadurch gekennzeichnet, daß das Mittel zum Simulieren den Vergleich zwischen dem von ihm am Eingang empfangenen Steuerfluß und dem Wert des falschen Flußparameters der Rezeptur, die die Bedienungsperson ausgewählt hätte, durchführt, und daß der tatsächliche Fluß, den es am Ausgang der Maschine im Falle eines Unterschieds liefert, einen Wert hat, der sehr verschieden von dem von der Maschine gesteuerten Fluß ist.

12. Verfahren zum Steuern nach den vorhergehenden Ansprüchen, dadurch gekennzeichnet, daß das Mittel zum Simulieren den Vergleich zwischen dem Steuerfluß und dem falschen Parameter der Rezeptur, die die Bedienungsperson ausgewählt hätte, durchführt und im Falle eines Unterschieds eine Fehlerpriorität in der Maschine hervorruft, um ein Sicherheitsorgan der Maschine zu alarmieren.

## Claims

1. A method of controlling a machine (M) that makes use of fluids, in which the flow rate of each fluid is controlled by an associated flow controller (MFCi), a flow controller having an input (Ei) for receiving a flow control signal on a control line (comi) of the machine and an ouput (Si) for delivering the actual flow rate signal on a reading line (leci) of the machine, and wherein formulae are memorised in the machine, on which an operator selects from among the memorised formulae a formula which prescribes, in respect of a manufacturing step, the fluids to be employed and their prescribed flow rates, the machine being further arranged to set, for each fluid that is employed and in a stabilisation phase, the associated prescribed flow rate at the input of the associated flow controller, and to read at the conclusion of this stabilisation phase the associated actual flow rate at the output of the associated flow controller, with the machine further going into error mode if, for a fluid that is employed, the prescribed flow rate and the actual flow rate are different,
the control method being characterised in that a false flow rate parameter is added to each of the memorised formulae with a different value for each one, and in that, in the stabilisation phase, a means (PC) for simulating a flow controller receives the said false flow rate parameter as a prescribed flow rate signal on a control line (com4) of the machine, and delivers an output signal (lec4) to the machine representing an actual flow rate that corresponds to the false flow rate parameter associated with a formula that the operator ought to have selected.

2. A control method according to Claim 1, characterised in that, for all the memorised formulae, the false flow rate parameter is associated with a fluid that is not employed in the manufacturing step, and in that each memorised formula is so modified that the said fluid is deemed to be employed, with a different value of flow rate in each formula.

3. A control method according to Claim 2, characterised in that, when a flow control signal representing a fully-open and a fully-closed condition respectively is received, corresponding to the fluid that is not employed in the manufacturing step, the simulating means feeds back a signal corresponding to the fully open and fully closed conditions respectively as an actual flow rate of the said fluid.

4. A control method according to the preceding Claims, for a machine for plasma etching of silicon wafers using reactive gases as fluids.

5. A control method according to Claim 1, characterised in that an etching cycle in which the plasma etching operation is not commenced is added to the manufacturing step, the prescribed flow rates of the reactive gases being added into each of the memorised formulae, the false flow rate parameter being the prescribed flow rate of a first reactive gas in the said etching cycle, the combination defined by the prescribed flow rates of the other reactive gases being the same in all the formulae memorised for the same etching cycle, with the simulating means receiving all the prescribed flow rates from each of the flow controllers, in such a way as to recognise the stabilisation phase of the said etching cycle from the combination of the flow rates of the other reactive gases, and then to take the place of the flow controller associated with the first reactive gas during this supplementary stabilisation phase.

6. A control method according to any one of the preceding Claims, characterised in that the simulating means controls a microprocessor.

7. A control method according to Claim 1, characterised in that the simulating means communicates with a central computer, which knows what formula the operator ought to have selected, and which transmits to the simulating means the false parameter corresponding to that formula which the operator ought to have selected.

8. A control method according to Claim 1, characterised in that it is employed for a plasma etching machine for treating batches of polysilicon wafers.

9. A control method according to Claim 8, characterised in that the simulating means transmits to a computer the number of silicon wafers etched in a batch treated by the machine.

10. A control method according to Claim 7, characterised in that the simulating means transmits to a computer signals regarding the state of the machine.

11. A control method according to the preceding Claims, characterised in that the simulating means makes the comparison between the prescribed flow rate which it receives as an input and the value of the false flow rate parameter of the formula which the operator ought to have selected, and in that the actual flow rate which it delivers as an output to the machine has, in the event of a difference, a value which is very different from the flow rate prescribed by the machine.

12. A control method according to the preceding Claims, characterised in that the simulating means makes the comparison between the prescribed flow rate and the false parameter of the formula which the operator ought to have selected, and, in the event of a difference, causes a priority error signal to be set up in the machine so as to alert a safety device of the machine.
